# EUROPEAN PATENT APPLICATION

(11) **EP 4 170 853 A1**
(43) Date of publication of application: **26.04.2023**
(21) Application number: 21826075.0
(22) Date of filing: 14.05.2021
(51) Int. Cl.: H02J 7/00, H02J 7/34, B60M 3/06, H02M 3/155, H02M 3/28, H02M 7/48

(54) **POWER CONVERSION DEVICE, POWER SUPPLY DEVICE FOR TRANSFORMER SUBSTATION, AND REGENERATIVE POWER STORAGE DEVICE**

(30) Priority: 17.06.2020 JP 2020104351
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: NOGI, Masayuki, Kawasaki-shi, Kanagawa 212-0013 (JP); MAKI, Koji, Kawasaki-shi, Kanagawa 212-0013 (JP)
(74) Representative: AWA Sweden AB
(86) International application number: PCT/JP2021/018487
(87) International publication number: WO 2021/256137

(57) **Abstract**

The purpose is to realize a small-sized power conversion device with a storage battery insulated from a power circuit. The power conversion device according to the present embodiment includes a chopper circuit (5) having a step-down output terminal electrically connected to the positive electrode terminal of a DC power supply (2) via a reactor (8) ; an inverter (INV1) having first DC main circuits electrically connected between the positive electrode terminal and negative electrode terminal of a DC power supply (1); an inverter (INV2) having second DC main circuits electrically connected to the high-voltage circuit side of the chopper circuit (5); a transformer (15) electrically connected between the AC terminal of the inverter (INV1) and the AC terminal of the inverter (INV2); a capacitor (13) connected in parallel to the DC power supply (1); a capacitor (12) arranged between the inverter (INV2) and the chopper circuit (5) and connected between the second DC main circuits; and a control circuit (CTR) configured to control the phases of the output voltages of the inverter (INV1) and inverter (INV2) in such a manner that power can be bidirectionally interchanged.

## Description

### FIELD

Embodiments described herein relate generally to a power conversion device, a substation power supply device, and a regenerative power storage device.

### BACKGROUND

A direct-current (DC) feeder system, which is a power supply system for DC electric trains, is characterized by drastically varying loads and also large fluctuations in feeder line voltages. Generally, generation of a direct current using a diode rectifier is conducted, and therefore power regeneration to an alternating-current (AC) power supply system cannot be achieved without a regenerative inverter. In the absence of a sufficient load for absorbing a regenerated current of a regenerative train in the vicinity of the train, this regenerative train will fail in the regeneration. To deal with such voltage fluctuations and regeneration failure, power storage devices are installed.

For instance, when a high-power electric train is introduced, the overhead line voltage tends to decrease, and surplus regenerative power needs to be absorbed. For this reason, a power storage device may be installed. Such a power storage device includes a converter for converting a battery voltage to a desired voltage and outputting the converted voltage.

### CITATION LIST

### PATENT LITERATURE

Patent Literature 1: Jpn. Pat. Appln. KOKAI Publication No. 2018-98834

### SUMMARY

### TECHNICAL PROBLEM

In a conventional power storage device, for example, a feeder circuit and a battery circuit are insulated from each other by a high-frequency transformer circuit so that the to-ground dielectric withstand voltage of the battery can be lowered. This enables charging and discharging of a desired amount of power between an overhead line and the storage battery. In the case of a DC 1500-V feeder, however, the wire voltage tends to fluctuate between approximately 900 V and 1800 V. If there is too large a difference between the voltages of the battery and the overhead line, the peak current flowing through the high-frequency transformer circuit will increase. As a result, the high-frequency transformer may need to be increased in size, and the current ratings of power semiconductor elements to be adopted in the power conversion device may also need to be increased, which may lead to an increase in the size and costs of the power storage device.

As a possible method, a step-up chopper may be provided on the feeder circuit side when viewed from the feeder circuit side so that a resonant high-frequency insulating circuit can be formed between the battery side and the DC circuit on the feeder side. The voltage fluctuation of the DC circuit may be suppressed to the level of the voltage fluctuation of the storage battery, thereby realizing the size reduction. This method, however, requires a resonant capacitor in the resonant circuit, which makes it difficult to reduce the size of the device. Furthermore, because of the resonant circuit, the DC voltage between the chopper circuit and the resonant circuit cannot be controlled to an arbitrary voltage. The DC voltage tends to increase to too high when the voltage fluctuation of the storage battery is taken into account or when the SOC of the storage battery is high. This may increase the switching surge of the chopper circuit.

Embodiments of the present embodiment have been made in view of the above-described circumstances. An object of the present embodiment is to realize a power conversion device, a substation power supply device, and a regenerative power storage device that are small in size, while insulating a storage battery from a feeder circuit.

### SOLUTION TO PROBLEM

A power conversion device according to an embodiment is electrically connected between a first DC power supply and a second DC power supply. The power conversion device comprises
a chopper circuit having a step-down output terminal electrically connected to a positive electrode terminal of the second DC power supply via a reactor; a first inverter having first DC main circuits electrically connected between a positive electrode terminal and a negative electrode terminal of the first DC power supply; a second inverter having second DC main circuits electrically connected to a high-voltage circuit side of the chopper circuit; a transformer electrically connected between an AC terminal of the first inverter and an AC terminal of the second inverter; a first capacitor connected in parallel to the first DC power supply; a second capacitor arranged between the second inverter and the chopper circuit and connected between the second DC main circuits; and a control circuit configured to control phases of output voltages of the first inverter and the second inverter in such a manner that power can be bidirectionally interchanged.

### BRIEF DESCRIPTION OF THE DRAWINGS

FIG. 1 is a diagram schematically illustrating an exemplary configuration of a power conversion device and a power supply device according to the first embodiment.
FIG. 2 is a diagram for explaining the state of power supply in the first DC power supply and the second DC power supply.
FIG. 3 is a diagram schematically showing an exemplary configuration of an inverter controller of the control circuit shown in FIG. 1.
FIG. 4 is a diagram for explaining an exemplary graph of the control circuit shown in FIG. 1.
FIG. 5 is a diagram schematically showing an exemplary configuration of a chopper controller of the control circuit shown in FIG. 1.
FIG. 6 is a diagram schematically illustrating an exemplary configuration of a power conversion device and a power supply device according to a second embodiment.

### DETAILED DESCRIPTION

Hereinafter, a power conversion device, a substation power supply device, and a regenerative power storage device according to the embodiments will be described in detail with reference to the drawings.

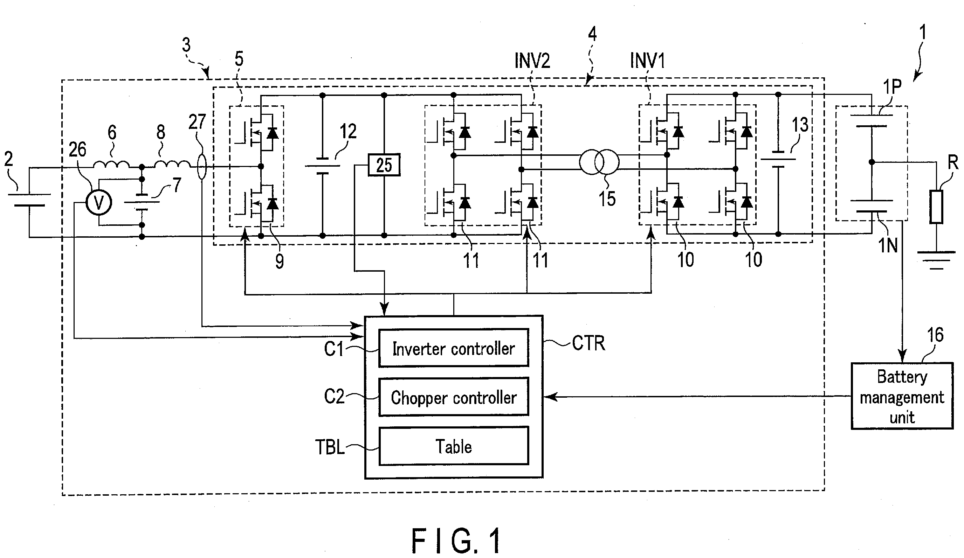

FIG. 1 is a diagram schematically illustrating an exemplary configuration of the power conversion device and power supply device according to the first embodiment.

The power supply device according to the present embodiment is a device installed, for example, in a substation or a regenerative power storage device ("battery post"). The power supply device includes a first DC power supply 1, a resistor R, and a power conversion device 3, and is electrically connected to a second DC power supply 2. The second DC power supply 2 is a DC power supply including a DC feeder circuit. The second DC power supply 2 may be an overhead line. The second DC power supply 2 is, for example, a DC 1500 V feeder. The voltage of the second DC power supply 2 has a fluctuation range in which the maximum voltage value is at least 1.5 times larger than the minimum voltage value.

The power conversion device 3 includes at least one power conversion unit 4, reactors 6 and 8, a capacitor 7, and a control circuit CTR. The power conversion device 3 may further include various detectors, such as voltage detectors 24, 25, and 26, and a current detector 27.

The first DC power supply 1 is a DC power supply including, for example, a storage battery. The first DC power supply 1 may include a power converter that converts AC power into DC power to output the DC power.

In the present embodiment, the first DC power supply 1 is connected to ground at a point (neutral point) between a high potential-side power supply 1P and a low potential-side power supply 1N via a resister R. The battery-to-ground potential of the storage battery of the first DC power supply 1 can thereby be lowered. With such a connection, a high-voltage output can be realized. In addition, when the first DC power supply 1 is a storage battery, the device can be downsized by reducing the to-ground potential and setting the voltage low at the time of designing the insulation. If the storage battery of the first DC power supply 1 has a sufficient dielectric withstand voltage, the first DC power supply 1 may be grounded on the lower potential side of the first DC power supply 1 instead of at the neutral point, such that a circuit on the side of the first DC power supply 1 with respect to the transformer 15 may be brought into an electrically floating state.

The power conversion unit 4 includes a chopper circuit 5, a first capacitor 13, a second capacitor 12, a first inverter INV1, a transformer 15, and a second inverter INV2.

The first inverter INV1 is a full-bridge circuit, which includes two legs electrically connected between the higher potential-side first DC main circuit and the lower potential-side first DC main circuit. Each leg of the first inverter INV1 includes an upper arm and a lower arm. Each of the upper arm and the lower arm of the first inverter INV1 includes a power semiconductor element 10 such as an insulated gate bipolar transistor (IGBT). With the use of power semiconductor elements 10 such as IGBTs, a conduction loss can be suppressed in the first inverter INV1.

The first capacitor 13 is connected between the higher potential-side DC terminal and the lower potential-side DC terminal of the first inverter INV1. That is, the first capacitor 13 is connected between the first DC main circuits, in parallel with the first DC power supply 1.

The second inverter INV2 is a full-bridge circuit, which includes two legs electrically connected between the second DC main circuits. Each leg of the second inverter INV2 includes an upper arm and a lower arm. Each of the upper and lower arms of the second inverter INV2 includes a power semiconductor element 11 such as an IGBT. With the power semiconductor elements 11 such as IGBTs, a conduction loss can be suppressed in the second inverter INV2.

The second capacitor 12 is connected between the higher potential-side DC terminal and the lower potential-side DC terminal of the second inverter INV2. That is, the second capacitor 12 is connected between the second DC main circuits.

The transformer 15 is connected between the AC terminals of the first inverter INV1 and second inverter INV2. The transformer 15 may be a high-frequency transformer circuit, which includes a first winding connected between the AC terminals of the two legs of the first inverter INV1 and a second winding connected between the AC terminals of the two legs of the second inverter INV2. The number of turns of the first winding and the number of turns of the second winding of the transformer 15 are determined in accordance with the voltage ratio between the second capacitor 12 and the first capacitor 13 and also with the voltage of the first DC power supply 1.

The higher-voltage circuit side of the chopper circuit 5 is electrically connected to the second DC main circuits of the second inverter INV2. The chopper circuit 5 is a half-bridge circuit, which includes two switching elements 9 connected in series between the higher potential-side second DC main circuit and the lower potential-side second DC main circuit. For the switching elements 9 of the chopper circuit 5, it is preferable to adopt switching elements (wide bandgap semiconductor elements) that incorporate a wide bandgap semiconductor such as a silicon carbide metal-oxide semiconductor field-effect transistor (SiC-MOSFET). The wide bandgap semiconductor may include a group III-V semiconductor. For the chopper circuit 5, which performs hard switching, this wide bandgap semiconductor can be adopted so that switching loss in the chopper circuit 5 can be reduced.

The reactor (second reactor) 6 and the reactor 8 are connected in series between the positive electrode terminal of the second DC power supply 2 and the two switching elements 9 on the highest potential side of the power conversion unit 4.

The capacitor (third capacitor) 7 is connected in series to the reactor 6 between the positive electrode terminal and negative electrode terminal of the second DC power supply 2. That is, the high potential-side terminal of the capacitor 7 is electrically connected to one end of the reactor 6. The other end of the reactor 6 is electrically connected to the positive electrode terminal of the second DC power supply 2. The reactor 6 and the capacitor 7 constitute an LC filter so as to prevent a harmonic current from flowing into the second DC power supply 2.

Another reactor (third reactor) may be arranged between the transformer 15 and the first inverter INV and/or between the transformer 15 and the second inverter.

The control circuit CTR is an operational circuit that includes at least one processor, such as a central processing unit (CPU) or a micro processing unit (MPU) , and a memory capable of storing a program to be implemented by the processor.

The control circuit CTR performs voltage control by controlling the operation of the chopper circuit 5 and thereby controlling the current flowing through the reactor 8 so that the voltage of the capacitor 7 can be brought to a predetermined value. The control circuit CTR can acquire, as needed to use for calculation, values detected by a voltage detector 26 for detecting the voltage of the capacitor 7, a current detector 27 for detecting the current flowing through the reactor 8, and various other detectors (not shown) included in the power conversion device 3.

The control circuit CTR controls the operations of the chopper circuit 5, first inverter INV1, and second inverter INV2 so that power can be supplied bidirectionally between the first DC power supply 1 and second DC power supply 2.

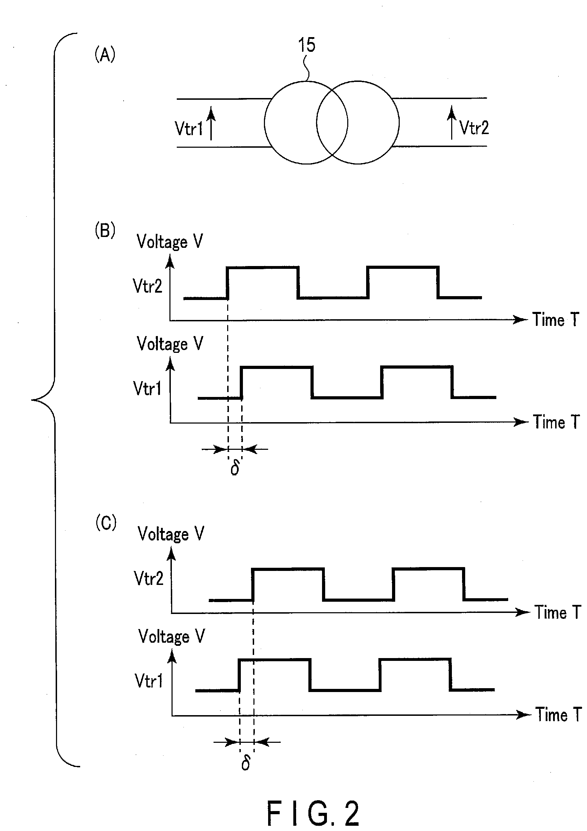

FIG. 2 is a diagram for explaining the state of power supply in the first DC power supply and the second DC power supply.

In (A) of FIG. 2, Vtr1 denotes the primary-side voltage of the transformer 15, and Vtr2 denotes the secondary-side voltage. As shown in (B) and (C) of FIG. 2, the voltages Vtr1 and Vtr2 form AC pulse voltages with respect to the time T.

Here, as shown in (B) of FIG. 2, the phase of the secondary-side voltage Vtr2 of the transformer 15 is delayed by δ [rad] with respect to the primary-side voltage Vtr1. Based on this phase difference, power can be supplied from the second DC power supply 2 (on the primary side) to the first DC power supply 1 (on the secondary side) . Furthermore, as shown in (C) of FIG. 2, the phase of the secondary-side voltage Vtr2 of the transformer 15 is advanced by δ[rad] with respect to the primary-side voltage Vtr1. Based on this phase difference, power can be supplied from the first DC power supply 1 (on the secondary side) to the second DC power supply 2 (on the primary side) . When the supply power P_{DC} is output from the second DC power supply 2 (on the primary side) to the first DC power supply 1 (on the secondary side) based on each of the first inverter INV1 and the second inverter INV2, the supply power P_{DC} can be represented as "P_{DC} = (E1 × E2 / ωL) × (5 - δ² / π)".

In the above formula of the supplied power P_{DC}, E1 denotes, for example, the voltage of the second capacitor 12 connected between the chopper circuit 5 and the second inverter INV2, E2 denotes the voltage of the first capacitor 13 of the first inverter INV1 connected to the first DC power supply 1, and ω denotes an angular frequency expressed by ω = 2πf. In this case, f is a frequency applied by the control circuit CTR to the transformer 15. L is a value obtained by adding the leakage inductance of the transformer 15 and the conductive inductances from the first and second inverters INV1 and INV2 to the transformer 15, and δ is a phase difference [rad] of the voltage output by the first inverter INV1, which is connected to the first DC power supply 1, with respect to the alternating current output to the transformer 15 by the second inverter INV2, which is connected the second DC power supply 2.

The control circuit CTR includes an inverter controller C1, a chopper controller C2, and a table TBL.

The control circuit CTR controls the storage battery device and the power conversion device in such a manner that the voltages of the second capacitor 12 and the third capacitor 7 take predetermined values.

In particular, for the second capacitor 12 between the chopper circuit 5 and the second inverter INV2, the voltage can be maintained at a desired voltage by controlling the power flow through the control of the phase difference δ between the output voltage of the first inverter INV1 and the output voltage of the second inverter INV2. This circuit portion is generally referred to as a dual active bridge (DAB). The control target voltage value V*ref here needs to be higher than at least the power supply voltage on the DC side.

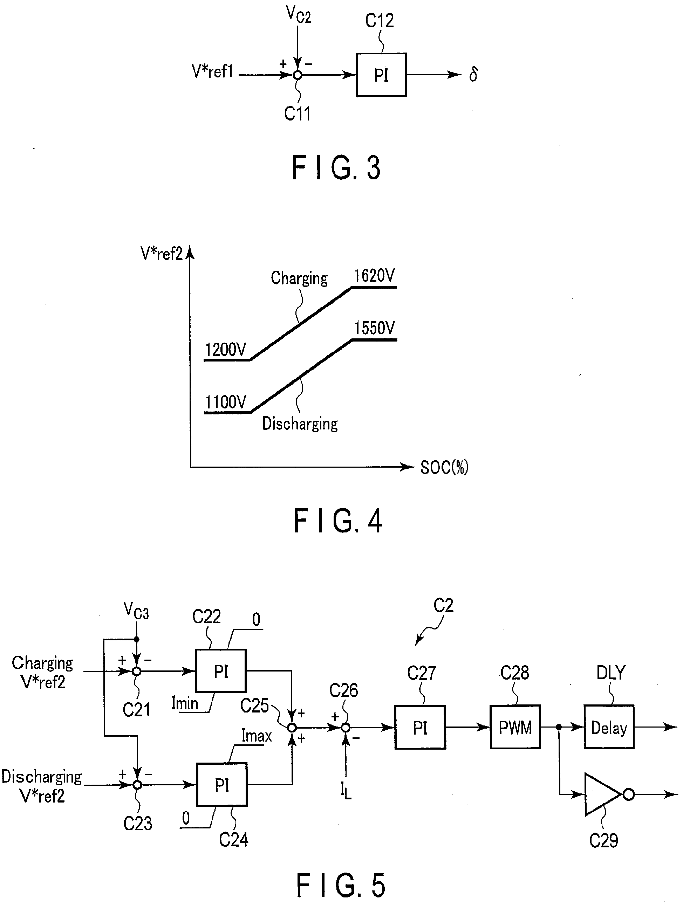

FIG. 3 is a diagram schematically showing an exemplary configuration of the inverter controller of the control circuit shown in FIG. 1. The inverter controller C1 includes a subtractor C11 and a PI controller C12.

The inverter controller C1 obtains the target voltage value V*ref1 and the voltage value V_{C2} of the second capacitor 12. The target voltage value V*ref1 may be preset in the control circuit CTR, or may be supplied from the outside of the control circuit CTR. The voltage value V_{C2} of the second capacitor 12 is detected by the voltage detector 25 and supplied to the control circuit CTR.

The subtractor C11 subtracts the voltage value V_{C2} of the second capacitor 12 from the target voltage value V*ref1 to calculate and output the difference. The PI controller C12 is a proportional integral controller, which calculates the value of the phase difference δ such that the value input from the subtractor C11 will be zeroed, and outputs the value of the difference.

The inverter controller C1 controls the operations of the switching elements of the first inverter INV1 and the second inverter INV2 such that the phase difference δ calculated by the PI controller C12 can be produced.

As will be discussed in the second embodiment, in the configuration of multiple power conversion units 4 being cascade-connected, the voltage of the second capacitor 12 is controlled so as to equally divide the voltage share of the converters in regard to the feeding voltage in such a manner that the control target voltage value V*ref1 becomes larger than the feeding voltage divided by n, where n denotes the number of power conversion units 4.

The control circuit CTR controls the operation of the chopper circuit 5 in such a manner that the voltage value V_{C3} of the third capacitor 7 takes a predetermined value and also that a predetermined amount of current flows through the reactor 8. Generally, in response to an increase in the overhead line voltage, a charging current flows from the feeder circuit side to the storage battery side in order to maintain the voltage at a constant value, and in response to a decrease in the overhead line voltage, a discharging current flows from the storage battery side to the feeder circuit side. The target voltage at the time of discharging of the storage battery and the target voltage at the time of charging do not necessarily need to have the same value. The voltage control may be performed in any manner as long as the relationship of the target voltage at charging ≥ the target voltage at discharging is satisfied.

FIG. 4 is a diagram for explaining an exemplary graph of the control circuit shown in FIG. 1.

In the storage battery device and the power conversion device of the present embodiment, values for the target voltage V*ref2 are stored on a table TBL such that the target voltage at charging remains larger than the target voltage at discharging with respect to the state of charge (SOC) of the first DC power supply 1, as shown in FIG. 4, for example. The numerical values for the target voltage V*ref2 shown in FIG. 4 are merely presented as examples, and therefore are not limitations.

FIG. 5 is a diagram schematically showing an exemplary configuration of a chopper controller of the control circuit shown in FIG. 1. The chopper controller C2 includes subtractors C21 and C23, PI controllers C22 and C24, a subtractor C26, a PI controller C27, a PWM controller C28, a delay unit DLY, and a NOT circuit C29.

The voltage value V_{C3} of the third capacitor 7, the current value IL of the reactor 8, and the SOC of the first DC power supply 1 are supplied to the chopper controller C2. The SOC of the first DC power supply 1 is supplied to the chopper controller C2, for example, from an external battery management unit 16. The chopper controller C2 obtains the target voltage V*ref2 corresponding to the SOC of the first DC power supply 1 with reference to the table TBL.

The battery management unit 16 may be included in the control circuit CTR. The battery management unit 16 is capable of detecting at least the voltage, current, and temperature of the first DC power supply 1, and is capable of calculating the SOC of the first DC power supply 1 based on the detected values.

The subtractor C21 calculates and outputs a difference obtained by subtracting the voltage value V_{C3} of the third capacitor 7 from the target voltage value V*ref2 at charging.

The PI controller C22 is a proportional integral controller, which calculates and outputs a target value for the current flowing through the reactor 8 such that the value input from the subtractor C21 will be zeroed. The PI controller C22 outputs a negative value as the target value of the current for charging the first DC power supply 1 such that the output value will be equal to or larger than the minimum Imin and equal to or smaller than 0.

The subtractor C23 calculates and outputs a difference obtained by subtracting the voltage value V_{C3} of the third capacitor 7 from the target voltage value V*ref2 at discharging.

The PI controller C24 is a proportional integral controller, which calculates and outputs a target value of the current flowing through the reactor 8 such that the value input from the subtractor C23 will be zeroed. The PI controller C24 outputs the output value having a positive value as the current for discharging the first DC power supply 1 such that the output value will be equal to or larger than 0 and equal to or smaller than the maximum value Imax.

The adder C25 adds the output value of the PI controller C22 and the output value of the PI controller C24, and outputs the resultant value. That is, when the first DC power supply 1 is to be charged, the output value of the PI controller C22 is output as the current target value, and when the first DC power supply 1 is to be discharged, the output value of the PI controller C24 is output as the current target value.

The subtractor C26 calculates and outputs a difference obtained by subtracting the value I_{L} of the current flowing through the reactor 8 from the value output from the adder C25.

The PI controller C27 is a proportional integral controller, which calculates and outputs a voltage command value of the chopper circuit 5 such that the value input from the subtractor C26 will be zeroed.

The PWM controller C28 compares the voltage command value output from the PI controller C27 with a preset carrier (e.g. , triangular wave) to generate, for example, a gate signal for the upper switching device 9 of the chopper circuit 5.

The delay device DLY outputs the gate signal for the upper switching device 9 of the chopper circuit 5 by delaying the gate signal output from the PWM controller C28 by a predetermined length of time.

The NOT circuit C29 outputs, as the gate signal for the lower switching device 9 of the chopper circuit 5, a signal obtained by inverting the value of the gate signal output from the PWM controller C28.

As described above, according to the power conversion device and the power supply device of the present embodiment, the voltage of the capacitor 7 of the chopper circuit 5 can be controlled. By performing the control without increasing the DC voltage on the side of the capacitor 7 of the chopper circuit 5, the loss in the chopper circuit 5 can be suppressed, and the surge voltage at the time of switching the switching elements 9 can be lowered. In place of the DAB circuit, the use of a resonant high-frequency isolation circuit in the power conversion unit 4 may be possible. The power conversion device and the power supply device according to the present embodiment, however, do not require resonant capacitors for a high-frequency isolation circuit of a resonance type, and therefore can realize downsizing in comparison to when a resonant high-frequency isolation circuit is adopted.

That is, according to the present embodiment, a downsized power conversion device, substation power supply device, and regenerative power storage device can be realized, with the storage battery insulated from the feeder circuit.

Next, a power conversion device, a substation power supply device, and a regenerative power storage device according to the second embodiment will be described in detail with reference to the drawings.

In the following description, the same components as those of the first embodiment described above will be denoted by the same reference numerals, and description thereof will be omitted.

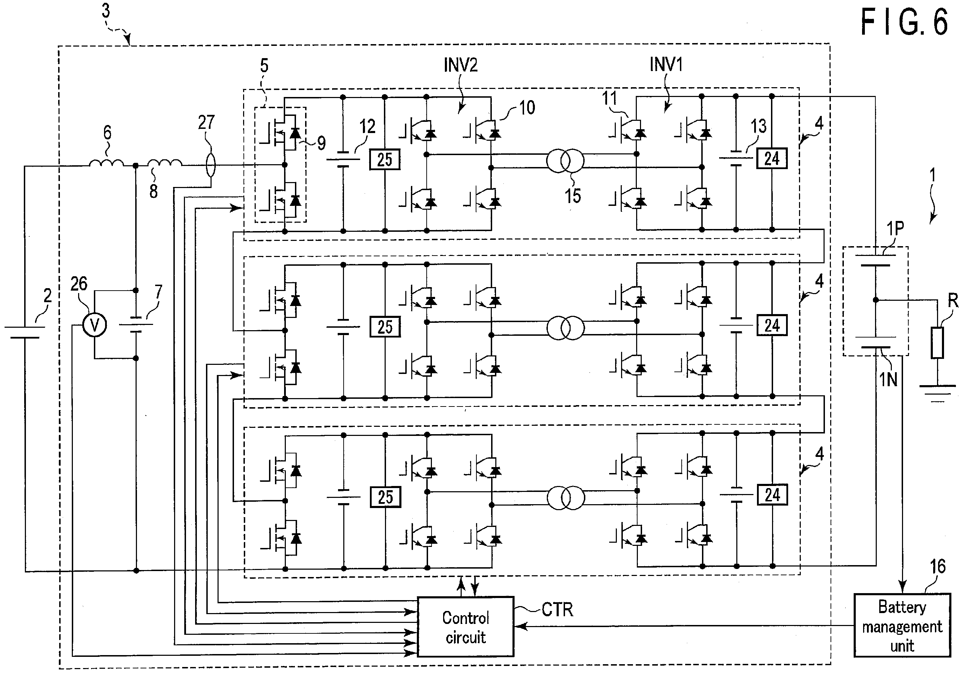

FIG. 6 is a diagram schematically illustrating an exemplary configuration of the power conversion device and power supply device according to the second embodiment.

The power conversion device 3 of the present embodiment includes a plurality of power conversion units 4. In the example illustrated in FIG. 6, the power conversion device 3 includes three power conversion units 4, but the number of power conversion units 4 is not limited thereto.

The first capacitors 13 of the three power conversion units 4 are connected in series between the positive electrode terminal and negative electrode terminal of the first DC power supply 1. In particular, the higher potential-side first DC main circuit of the highest potential-side power conversion unit 4 is electrically connected to the positive electrode terminal of the first DC power supply 1. The lower potential-side first DC main circuit of the highest potential-side power conversion unit 4 is electrically connected to the higher potential-side first DC main circuit of the next-stage power conversion unit 4 (connected to the lower potential side). The higher potential-side first DC main circuit of the lowest potential-side power conversion unit 4 is electrically connected to the lower potential-side first DC main circuit of the preceding-stage power conversion unit 4 (connected to the higher potential side) . The lower potential-side first DC main circuit of the lowest potential-side power conversion unit 4 is electrically connected to the negative electrode terminal of the first DC power supply 1.

The chopper circuits 5 of the three power conversion units 4 are electrically connected to each other at the step-down output terminals. That is, the lower potential-side second DC main circuit of a power conversion unit 4 is electrically connected between the two switching elements 9 of the next-stage power conversion unit 4 (connected to the lower potential side) . The portion between the two switching elements 9 of the chopper circuit 5 of the highest potential-side power conversion unit 4 is electrically connected to the positive electrode terminal of the second DC power supply 2 via the reactor 8 and the reactor 6. The lower potential-side second DC main circuit of the lowest potential-side power conversion unit 4 is electrically connected to the negative terminal of the second DC power supply 2. That is, the three power conversion units 4 are cascade-connected on the side of the chopper circuits 5, as shown in FIG. 6.

The reactor 6 and reactor 8 are connected in series between the positive electrode terminal of the second DC power supply 2 and the two switching elements 9 of the highest potential-side power conversion unit 4. The capacitor 7 is serially connected to the reactor 6 between the positive electrode terminal and negative electrode terminal of the second DC power supply 2. The reactor 6 and the capacitor 7 constitute an LC filter so as to prevent a harmonic current from flowing into the second DC power supply 2.

Each of the power conversion units 4 includes a voltage detector 24 and a voltage detector 25, where the voltage detector 24 is configured to measure the voltage value of the first capacitor 13 on the side of the first DC power supply 1, and the voltage detector 25 is configured to detect the voltage of the second capacitor 12 between the chopper circuit 5 and the second inverter INV2.

In the same manner as in the first embodiment described above, the control circuit CTR controls the operations of the chopper circuit 5, first inverter INV1, and second inverter INV2 in each of the power conversion units 4. In the configuration of multiple power conversion units 4 being cascade-connected, the voltage of the second capacitor 12 is controlled so as to equally divide the voltage share of the converters in regard to the feeding voltage in such a manner that the control target voltage value V*ref1 becomes larger than the feeding voltage divided by n, where n denotes the number of power conversion units 4.

The control circuit CTR further controls the operations of the three power conversion units 4 such that the switching phases of the chopper circuits 5 of the three power conversion units 4 are shifted from each other. In the power conversion device and the power supply device according to the present embodiment, with the switching phases of the chopper circuits 5 of the power conversion unit 4 being shifted from each other, an equivalent switching frequency can be kept high for the converter, as a result of which the reactor 6 and the reactor 8 can be downsized. According to the power conversion device and the power supply device that include a plurality of power conversion units 4 connected in a manner as described above, a high-voltage output can be realized. In addition, when the first DC power supply 1 is a storage battery, the device can be downsized by reducing the battery-to-ground potential and setting the voltage low at the time of insulation design.

According to this embodiment, the same effects as in the first embodiment described above can be attained. That is, according to the present embodiment, a downsized power conversion device, substation power supply device, and regenerative power storage device can be realized, with the storage battery insulated from the feeder circuit.

The embodiments described above have been presented by way of example only, and are not intended to limit the scope of the invention. Indeed, the novel embodiments described herein may be embodied in a variety of other forms. Furthermore, various omissions, substitutions and modifications in the form of the embodiments described herein may be made without departing from the spirit of the inventions. The accompanying claims and their equivalents are intended to cover such forms or modifications as would fall within the scope and spirit of the inventions.

For example, in the embodiments described above, a plurality of first capacitors 13 are connected in series between the positive electrode terminal and negative electrode terminal of the first DC power supply 1. The first capacitors 13, however, may be connected in parallel to the first DC power supply 1. Even with such a configuration, the same effects as those of the above-described embodiments can be attained.

The embodiments described above have been presented by way of example only, and are not intended to limit the scope of the invention. Indeed, the novel embodiments described herein may be embodied in various other forms. Furthermore, various omissions, substitutions and modifications in the form of the embodiments described herein may be made without departing from the spirit of the inventions. The accompanying claims and their equivalences are intended to cover such forms or modifications as would fall within the scope and spirit of the inventions.

## Claims

1. A power conversion device electrically connected between a first DC power supply and a second DC power supply, the power conversion device comprising:
a chopper circuit having a step-down output terminal electrically connected to a positive electrode terminal of the second DC power supply via a reactor;
a first inverter having first DC main circuits electrically connected between a positive electrode terminal and a negative electrode terminal of the first DC power supply;
a second inverter having second DC main circuits electrically connected to a high-voltage circuit side of the chopper circuit;
a transformer electrically connected between an AC terminal of the first inverter and an AC terminal of the second inverter;
a first capacitor connected in parallel to the first DC power supply;
a second capacitor arranged between the second inverter and the chopper circuit and connected between the second DC main circuits; and
a control circuit configured to control phases of output voltages of the first inverter and the second inverter in such a manner that power can be bidirectionally interchanged.

2. The power conversion device according to claim 1, wherein the control circuit performs control by changing the phases of the output voltages of the first inverter and the second inverter in such a manner that a voltage value of the second capacitor will reach a target value.

3. The power conversion device according to claim 1 or 2, the device comprising a third capacitor connected in parallel to the second DC power supply.

4. The power conversion device according to claim 3, the power conversion device comprising a plurality of power conversion units each including the chopper circuit, the first inverter, the second inverter, the transformer, the first capacitor, and the second capacitor,
wherein the control circuit controls the chopper circuit in such a manner that a voltage of the third capacitor will reach a target voltage.

5. The power conversion device according to claim 3 or 4, the power conversion device comprising a second reactor connected between the positive electrode terminal of the second DC power supply and a higher potential-side terminal of the third capacitor.

6. The power conversion device according to claim 1, the power conversion device comprising a plurality of power conversion units each including the chopper circuit, the first inverter, the second inverter, the transformer, the first capacitor, and the second capacitor,
wherein the chopper circuits of the power conversion units are cascade-connected.

7. The power conversion device according to claim 6, wherein the first capacitors of the power conversion units are connected in series between the first DC main circuits.

8. The power conversion device according to any one of claims 1 to 7, wherein neutral grounding is established for the first DC power supply.

9. The power conversion device according to any one of claims 1 to 8, wherein the first DC power supply is a storage battery, and the second DC power supply is a DC feeder circuit.

10. The power conversion device according to any one of claims 1 to 9, wherein a voltage of the second DC power has a fluctuation range with a maximum voltage value that is 1.5 or more times larger than a minimum voltage value.

11. The power conversion device according to any one of claims 1 to 10, the device further comprising a third reactor arranged between the transformer and the first inverter and/or between the transformer and the second inverter.

12. A substation power supply device comprising:
the power conversion device according to any one of claims 1 to 11; and
the first DC power supply.

13. A regenerative power storage device comprising:
the power conversion device according to any one of claims 1 to 11; and
the first DC power supply.
